# EUROPEAN PATENT APPLICATION

(11) **EP 4 794 452 A1**
(43) Date of publication of application: **19.08.2026**
(21) Application number: 25157620.3
(22) Date of filing: 13.02.2025
(51) Int. Cl.: H05B 47/115

(54) **LIGHTING CONTROL**

(71) Applicant: Helvar Oy Ab, 02150 Espoo (FI)
(72) Inventor: JUSLÉN, Henri, 02150 ESPOO (FI); NASIR, Omar, 02150 ESPOO (FI); KARIMI, Negin, 02150 ESPOO (FI)
(74) Representative: Berggren Oy

(57) **Abstract**

According to an embodiment, a control apparatus for a luminaire (120-k) of a lighting system (100) comprising a plurality of luminaires (120) communicatively coupled to each other by a lighting control network is provided, the control apparatus comprising: a control portion (124-k) arranged to control light output of said luminaire (120-k) according to a preprogrammed lighting control logic that comprises at least a first lighting control rule that defines switching on the light output in response to detecting occupancy at a location of said luminaire (120-k); and an adaptation portion (125-k) arranged to: receive, over the lighting control network, a plurality of status indications, where each status indication pertains to a certain other luminaire of the lighting system (100) and it is descriptive of an occurrence of an event that pertains to the respective other luminaire, select a first subset of other luminaires based on their spatial relationships with a location of said luminaire (120-k), carry out, based on a history of status indications that pertain to said first subset of other luminaires and that have been received during a first learning period, a first learning procedure to identify a first repeatedly occurring pattern that includes a first sequence of received status indications followed by detecting occupancy at the location of said luminaire (120-k), and reprogram, in response to identifying the first repeatedly occurring pattern, the lighting control logic to further include a second lighting control rule that defines switching on the light output of said luminaire (120-k) as a response to reception of said first sequence of status indications.

## Description

### TECHNICAL FIELD

The present invention relates to autonomous lighting control and, in particular, to a technique for adapting autonomous lighting control for a luminaire based on information received from and/or derived for other luminaires in its operating environment in the course of its operation.

### BACKGROUND

Many lighting systems applied for illuminating an indoor space or area or an outdoor area at least partially rely on autonomous control of light output of luminaries of the lighting system, where the autonomous control is based on environmental characteristics determined via application of sensor devices operating in the illuminated space or area. Typical, but non-limiting, examples of sensors applicable for capturing sensor data that is applicable for controlling at least some aspect of the light output include an occupancy sensor and a light sensor: while an occupancy sensor may be applied to switch on (and keep on) lights in response to detecting occupancy in the space and to switch off (and keep off) lights in response to detecting non-occupancy in the space, a light sensor may be applied to control the light output in view of the ambient light level in the space such that a desired overall illumination level is provided. Hence, sensor data enables at least partially autonomous lighting control that ensures user comfort while minimizing energy consumption.

A basic approach to at least partially autonomous control of light output of a given luminaire relies on preprogrammed lighting control logic that is at least partially based on sensor data captured at or for the given luminaire, e.g. via the given luminaire switching on its light output in response to sensor data captured therefor indicates a change of occupancy status from non-occupancy to occupancy. In a more advanced approach the given luminaire has access to respective sensor data captured for and/or lighting control actions taken by other luminaires operating in the same or adjacent space or area and it considers this information as further input to its lighting control logic. A straightforward approach in this regard involves manual preprogramming of the lighting control logic of the given luminaire upon installation, configuration or reconfiguration of the given luminaire as part of the lighting system. A typical example in this regard involves assigning the given luminaire to a luminaire group and preprogramming its lighting control logic to switch on its light output in response to any other luminaire of the same luminaire group switching on its light output.

However, in many scenarios such manual preprogramming is inconvenient or even virtually impossible, thereby increasing the risk of misconfiguration and, consequently, compromised lighting performance e.g. in terms of insufficient light level and/or excessive energy consumption. Moreover, the manual preprogramming is typically carried out in view of lighting requirements known at the time of installing, configuring or reconfiguring the given luminaire, whereas any subsequent changes in the lighting requirements necessarily require a manual reprogramming of its lighting control logic.

In yet more advanced approach for making use of the sensor data captured for other luminaires and/or the lighting control actions taken at the other luminaires, the given luminaire is able to autonomously adapt its preprogrammed lighting control logic based on the sensor data and/or lighting control actions taken by the other luminaires. In this regard, the given luminaire may be arranged to learn patterns or sequences of sensor data and/or lighting control actions of the other luminaires in its operating environment that frequently precede the given luminaire taking a certain lighting control action and, consequently, to autonomously reprogram its lighting control logic to also take the certain lighting control action in response to detecting a future occurrence of such a pattern or sequence. A typical example of such learning is that the given luminaire learns that a change in occupancy status from non-occupancy to occupancy detected for a certain other luminaire frequently leads into the given luminaire switching on its light output and hence the given luminaire reprograms its lighting control logic to switch on its light output in response to detecting such a change in occupancy for the certain other luminaire. Examples of techniques for implementing such an autonomous adaptation of its lighting control logic are disclosed in the European patent publications no. 2919562 and no. 3171674, whereas machine learning techniques known in the art are likewise applicable for implementing such an autonomous adaptation of the lighting control logic in the given luminaire.

While the above-described manner of autonomous adaptation or reprogramming of the lighting control logic provides a well-working technique for the given luminaire to adjust its operation in accordance with its operating environment, further improvements in such autonomous adaptation techniques are nevertheless advantageous.

### SUMMARY

It is an object of the present invention to provide a technique that facilitates improved autonomous adaptation of a lighting control logic for a luminaire based on information obtained from operating environment of the luminaire in the course of its operation.

According to an embodiment, a control apparatus for a luminaire of a lighting system comprising a plurality of luminaires communicatively coupled to each other by a lighting control network is provided, the control apparatus comprising: a control portion arranged to control light output of said luminaire according to a preprogrammed lighting control logic that comprises at least a first lighting control rule that defines switching on the light output in response to detecting occupancy at a location of said luminaire; and an adaptation portion arranged to: receive, over the lighting control network, a plurality of status indications, where each status indication pertains to a certain other luminaire of the lighting system and it is descriptive of an occurrence of an event that pertains to the respective other luminaire, select a first subset of other luminaires based on their spatial relationships with a location of said luminaire, carry out, based on a history of status indications that pertain to said first subset of other luminaires and that have been received during a first learning period, a first learning procedure to identify a first repeatedly occurring pattern that includes a first sequence of received status indications followed by detecting occupancy at the location of said luminaire, and reprogram, in response to identifying the first repeatedly occurring pattern, the lighting control logic to further include a second lighting control rule that defines switching on the light output of said luminaire as a response to reception of said first sequence of status indications.

According to another embodiment, a method for controlling light output from a luminaire of a lighting system comprising a plurality of luminaires communicatively coupled to each other by a lighting control network is provided, the method comprising: operating said luminaire according to a preprogrammed lighting control logic that comprises at least a first lighting control rule that defines switching on the light output in response to detecting occupancy at a location of said luminaire; receiving, over the lighting control network, a plurality of status indications, where each status indication pertains to a certain other luminaire of the lighting system and it is descriptive of an occurrence of an event that pertains to the respective other luminaire; selecting a first subset of other luminaires based on their spatial relationships with a location of said luminaire; carrying out, based on a history of status indications that pertain to the first subset of other luminaires and have been received during a first learning period, a first learning procedure to identify a first repeatedly occurring pattern that includes a first sequence of received status indications followed by detecting occupancy at the location of said luminaire; and reprograming, in response to identifying the first repeatedly occurring pattern, the lighting control logic to further include a second lighting control rule that defines switching on the light output of said luminaire as a response to reception of said first sequence of status indications.

According to another embodiment, a computer program for controlling light output from a luminaire is provided, the computer program comprising computer readable program code configured to cause performing at least the method according to the example embodiment described in the foregoing when said program code is executed on a computing apparatus.

The computer program according to the above-described example embodiment may be embodied on a volatile or a non-volatile computer-readable record medium, for example as a computer program product comprising at least one computer readable non-transitory medium having the program code stored thereon, which, when executed by a computing apparatus, causes the computing apparatuses at least to perform the method according to the example embodiment described in the foregoing.

The exemplifying embodiments of the invention described in the present disclosure and variations thereof are not to be interpreted to pose limitations to the applicability of the appended claims. Moreover, the verb "to comprise" and its derivatives are used in the present disclosure to indicate an open limitation that does not exclude the existence of also unrecited features.

Some features of the invention are set forth in the appended claims. Aspects of the invention, however, both as to its construction and its method of operation, together with additional objects and advantages thereof, will be best understood from the following description of example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some components of a lighting system according to an example;
Figure 2 illustrates a block diagram of some components of a luminaire according to an example;
Figure 3 illustrates a method according to an example; and
Figure 4 illustrates a block diagram of some components of an apparatus according to an example.

### DESCRIPTION OF SOME EMBODIMENTS

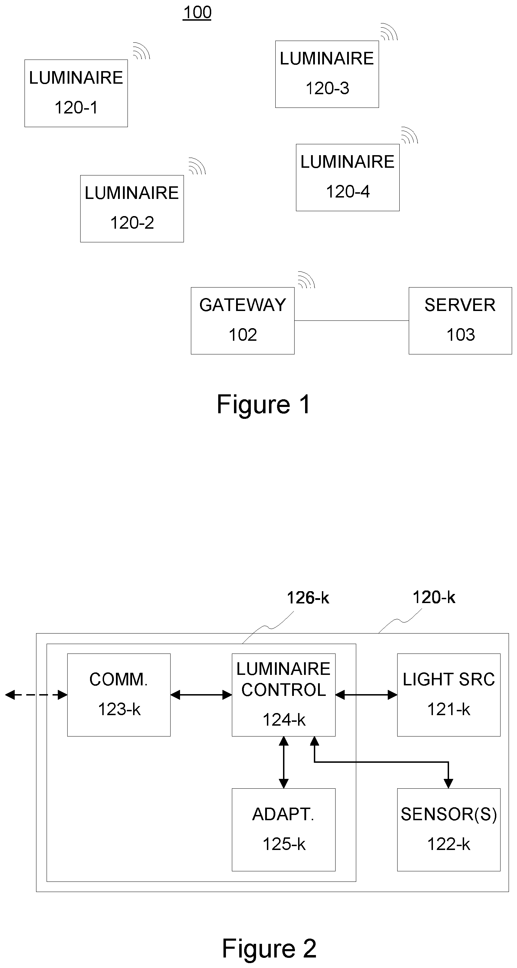

Figure 1 illustrates a block diagram of some logical elements of a lighting system 100 according to an example. The lighting system 100 is provided for illuminating one or more spaces and/or areas, whereas in the example of Figure 1 the lighting system comprise luminaires 120-1, 120-2, 120-3 and 120-4 provided for illuminating respective locations within the one or more spaces and/or areas. The luminaires 120-1 to 120-4 represent a plurality of luminaries, which may be jointly referred to via a reference number 120, whereas any individual luminaire of the plurality of luminaires 120 may be referred to via a reference number 120-k. The one or more spaces and/or areas illuminated by the lighting system 100 may comprise e.g. one or more indoor spaces or areas and/or one or more outdoor areas. The plurality of luminaires 120 may be communicatively coupled to each other via a wireless communication network or via respective wireless communication links using a suitable wireless communication technique known in the art, each of the plurality of luminaires 120 hence serving as a respective node of a lighting control network.

The example of Figure 1 further illustrates a lighting system gateway 102 and a server 103. The lighting system gateway 102 may be communicatively coupled to the plurality of luminaires 120 via the lighting control network, the lighting system gateway 102 thereby also constituting a node of the lighting control network. The lighting system gateway 102 may be communicatively coupled to the server 103, where the communitive coupling between these two entities may be provided via a communication network such as the Internet. Hence, the lighting control network may be communicatively coupled to the server 103 via the lighting system gateway 102.

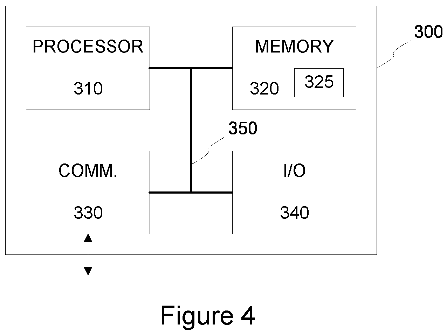

Each of the lighting system gateway 102 and the server 103 is to be construed as a respective logical entity that may be implemented by one or more computer apparatuses. As an example, the lighting control gateway 102 may be implemented by a single computer apparatus and/or the server 103 may be implemented by one or more computer apparatuses that may be arranged to provide a cloud computing service. In this regard, each computer apparatus involved may comprise a processor and a memory, where the memory is arranged to store computer program code that, when executed by the processor, implements (at least a portion of) operation of the respective one of the lighting system gateway 102 or the server 103 according to the present disclosure. More detailed examples of using a computer apparatus to implement at least some functionalities of the lighting system gateway 102 or the server 103 are described later in this text with references to Figure 4.

It is worth noting that the example of Figure 1 serves to illustrate the plurality of luminaires 120, the lighting system gateway 102 and the server 103 as respective functional elements of the lighting system 100, while on the other hand the illustration of Figure 1 does not serve to illustrate any physical characteristics of these elements of the lighting system 100 and/or any aspects of spatial relationship between these elements of the lighting system 100. The lighting system 100 may include one or more further elements in addition to those illustrated in the example of Figure 1, e.g. one or more addition control apparatuses and/or one or more sensor units, which may be likewise coupled to plurality of luminaries 120, to the lighting control gateway 103, and to each other via the lighting control network.

In the following, some characteristic of structure and operation of any of the plurality of luminaires 120 are described via references to the single luminaire 120-k, whereas these characteristics pertain to each of the plurality of luminaires 120, unless explicitly described otherwise. Moreover, certain characteristic of structure and operation of the luminaire 120-k are described herein for completeness of the description, whereas details of luminaire characteristics and operation are outside the scope of the present invention.

Figure 2 illustrates a block diagram of some elements of a luminaire 120-k according to an example, where the luminaire 120-k comprises at least one light source 121-k for providing light output of the luminaire 120-k, a sensor portion 122-k and a lighting control apparatus 126-k. The sensor portion 122-k comprises one or more sensors for observing respective one or more environmental characteristics at the location of the luminaire 120-k, whereas the lighting control apparatus 126-k comprises a communication portion 123-k, a control portion 124-k and an adaptation portion 125-k. The communication portion 123-k comprises one or more communication apparatuses for wireless communication with other apparatuses over the lighting control network, the control portion 124-k is arranged for controlling the light output of the luminaire 120-k at least partially based on sensor data obtained from the one or more sensors of the sensor portion 122-k, whereas the adaptation portion 125-k is arranged for adjusting operation of the control portion 124-k in accordance with one or more characteristics of operating environment of the luminaire 120-k.

According to an example, the at least one light source 121-k may comprise one or more light emitting diodes (LEDs) and the control portion 124-k may comprise or it may be provided as a LED driver device, whereas in another non-limiting example the at least one light source 121-k may comprise one or more fluorescent lamps and the control portion 124-k may comprise or it may be provided as an electronic ballast. According to an example, the lighting control apparatus 126-k comprises a processor and a memory, where the memory is arranged to store computer program code that, when executed by the processor, causes the computer apparatus to implement at least some aspects of operation of the control portion 124-k and the adaptation portion 125-k according to the present disclosure. More detailed examples of using the processor and the memory to implement at least some functionalities of the control portion 124-k and the adaptation portion 125-k are described later in this text with references to Figure 4.

The luminaire 120-k or an element thereof may have a device ID, e.g. an address, a serial number, a name, etc. assigned thereto, where the device ID assigned to the luminaire 120-k may be referred to as its luminaire ID. The luminaire ID may be stored, for example, in the memory provided in the luminaire 120-k (e.g. in the memory provided at the lighting control apparatus 126-k) and the luminaire ID may be applied, for example, to identify the luminaire 120-k in communication between elements of the lighting control network.

Along the lines described in the foregoing, the communication portion 123-k comprises one or more communication apparatuses, e.g. one or more wireless transceivers, that enable wireless communication with other apparatuses over the lighting control network. The wireless communication may be carried out via using a suitable short-range wireless communication technique known in the art that enables communication over ranges from a few meters up to a few hundred meters. Non-limiting examples of suitable wireless communication techniques include Bluetooth, Bluetooth Low-Energy (BLE), ZigBee, WLAN/Wi-Fi according to an IEEE 802.11 family of standards. In a particular example of making use of a wireless communication technique, the lighting control network may be provided as a wireless mesh network, e.g. one according to the Bluetooth or Bluetooth LE Mesh networking protocol.

The sensor portion 122-k may comprise one or more sensors arranged to observe respective one or more environmental characteristics at the location of the luminaire 120-k. The one or more sensors of the sensor portion 122-k may be communicatively coupled, e.g. via respective electrical wires, to the control portion 124-k in order to provide respective sensor signals thereto. The one or more sensors of the sensor portion 122-k may comprise respective sensors of different type, e.g. one or more of the following sensors:
- an occupancy sensor for monitoring occupancy at the location of the luminaire 120-k, e.g. a passive infrared (PIR) sensor, a microwave radar, a lidar, a video camera, a thermal camera, etc.;
- a light sensor for measuring ambient light level at the location of luminaire 120-k, e.g. photodetector such as photodiode;
- a temperature sensor for measuring ambient temperature at the location of the luminaire 120-k;
- a humidity sensor for measuring air humidity at the location of the luminaire 120-k;
- a sound sensor (e.g. a microphone or a microphone array) for capturing sounds at the location of the luminaire 120-k;
- a carbon dioxide (CO₂) sensor for measuring a CO₂ level at the location of the luminaire 120-k;
- a volatile organic compound (VOC) sensor for measuring respective levels of one or more VOCs at the location of the luminaire 120-k.

In the course of its operation, the control portion 124-k may record or derive respective sensor indications based on respective sensor signals received from the sensor portion 122-k, which may be referred to as respective local sensor indications since they are based on sensor data captured locally at the luminaire 120-k, whereas the local sensor indications recorded or derived at the luminaire 120-k may be jointly referred to as local sensor data. Non-limiting examples in this regard include the control portion 124-k deriving local occupancy state indications based on an occupancy sensor signal received from a occupancy sensor of the sensor portion 122-k, the control portion 124-k recording or deriving local light level indications based on a light sensor signal received from the sensor portion 122-k, the control portion 124-k deriving one or more local sound parameters (e.g. ones that are descriptive of sound level at the location of the luminaire 120-k) based on a sound sensor signal received from the sound sensor of the sensor portion 122-k, the control portion 124-k recording or deriving local CO₂ level indications based on a CO₂ sensor signal received from a CO₂ sensor of the sensor portion 122-k, etc.

The occupancy state indications derived based on the occupancy sensor signal may constitute a particularly important part of the sensor data, since they may be considered as a primary input for controlling light output from the luminaire 120-k in a manner that ensures sufficient lighting when the location of the luminaire 120-k is occupied while reducing or switching off the light output when the location is not occupied. The above-mentioned manner of using the occupancy state indications to indicate one of occupancy or non-occupancy enables a straightforward approach for controlling the light output of the luminaire 120-k in an on-need basis. In other examples, the occupancy state indications may include further and/or different information, such as a likelihood of occupancy, an occupancy level in a predefined scale (e.g. to approximate the number of occupants in the predefined scale), an occupancy location in relation to the luminaire 120-k (e.g. direction and/or distance from the luminaire 120-k) etc., which may enable controlling the light output at further accuracy in consideration of one or more characteristics of the occupation at the location of the luminaire 120-k.

In some examples, the occupancy state indications may be derived further based on information received from another sensor and/or via operation of the communication portion 123-k (e.g. via application of the Bluetooth Channel Sounding technique, in case the lighting control network is implemented using the Bluetooth Core specification version 6.0 or later), which may enable further accuracy in indicting occupancy location in relation to the luminaire 120-k). The following examples, however, make occasional references to 'basic' occupancy state indications that indicate one of occupancy or non-occupancy, whereas the techniques described in the present invention readily extends to approaches where occupancy state indications of different and/or more elaborate kind are applied, *mutatis mutandis.*

The control portion 124-k may store at least part of the local sensor indications into the memory provided in the luminaire 120-k (e.g. in the memory provided at the lighting control apparatus 126-k) for subsequent use. In this regard, the control portion 124-k may arrange the local sensor indications recorded or derived therein into a respective time series of local sensor indications. Consequently, in various examples, the light output of luminaire 120-k may be controlled based at least in part on one or more time series of local sensor indications, e.g. on a time series of local occupancy state indications and/or on a time series of local light level indications. Additionally or alternatively, the control portion 124-k may transfer at least part of the local sensor data recorded or derived therein over the lighting control network to the lighting system gateway 102, whereas the lighting system gateway 102 may control at least some aspects of operation and/or light output of the plurality of luminaires 120 based on the sensor data received from the luminaire 120-k (and/or from other ones of the plurality of luminaires 120) and/or it may transfer at least part of the sensor data received from the luminaire 120-k (and/or from other ones of the plurality of luminaires 120) to the server 103 for storage and/or processing therein.

Lighting control via operation of the control portion 124-k may at least partially rely on a preprogrammed lighting control logic that defines controlling the light output of the luminaire 120-k in accordance with the local sensor data obtained from the sensor portion 122-k, thereby providing at least partially autonomous lighting control at the luminaire 120-k via application of the preprogrammed lighting control logic. As an example, the preprogrammed lighting control logic may define switching on the light output of the luminaire 120-k as a response to the local sensor data indicating occupancy after a period of non-occupancy and define switching off the light output of the luminaire 120-k as a response to the local sensor data indicating non-occupancy after a period of occupancy. In this regard, the preprogrammed lighting control logic may include one or more predefined lighting control rules, where each lighting control rule may define a respective pair of a triggering condition and a lighting control action to be carried out as a response to an occurrence of the triggering condition, where the triggering condition may directly or indirectly pertain to one or more time series of local sensor indications. As a non-limiting example, the preprogrammed lighting control logic may define one or more of the following lighting control rules:
- a lighting control rule that defines switching on the light output of the luminaire 120-k to a target light intensity or otherwise adjusting the light output of the luminaire 120-k from a lower light intensity to the target light intensity as a response to the time series of local occupancy state indications indicating a change of a (first) predefined kind in the occupancy state, e.g. a change of the occupancy state from non-occupancy to occupancy;
- a lighting control rule that defines adjusting the light output of the luminaire 120-k (e.g. from the target light intensity) to a stand-by light intensity (e.g. switching off the light output of the luminaire 120-k) in accordance with a dimming curve as a response to the time series of local occupancy state indications indicating a change of a (second) predefined kind in the occupancy state, e.g. a change of occupancy state from occupancy to non-occupancy;
- a lighting control rule that defines keeping on the light output of the luminaire 120-k at the target light intensity as a response to the time series of local occupancy state indications indicating continued occupancy;
- a lighting control rule that defines keeping the light output of the luminaire 120-k at the stand-by light intensity as a response to the time series of local occupancy state indications indicating continued non-occupancy.

The target light intensity and the stand-by light intensity referred to above serve as respective examples of lighting control parameters that have an effect on operation of the luminaire 120-k via application of the respective lighting control rules making use of these lighting control parameters. According to an example, at least some of the lighting control parameters may be set to respective predefined values e.g. upon manufacturing, installing, configuring or reconfiguring the luminaire 120-k, whereas in another example the lighting control parameters under consideration may be set to respective values chosen in dependence of a current operational state of the luminaire 120-k, e.g. based on one or more environmental characteristics at the location of the luminaire 120-k. In various examples, the target light intensity and the stand-by light intensity may be set to respective values that are applicable for providing the light output of the luminaires 120, respectively, at a target light level and at a stand-by light level. As examples in this regard, the stand-by light level may be zero or a small non-zero light level.

The dimming curve referred to above may define adjustment of the light output from the target light intensity to the stand-by light intensity via one or more intermediate light intensities over a predefined time period, where the time period may be referred to as a dimming period. Parameters that characterize the dimming curve (e.g. the one or more intermediate light intensities and a duration of the dimming period) may be likewise considered as respective lighting control parameters that may be set upon manufacturing, installing, configuring or reconfiguring the luminaire 120-k to respective predefined default values or that may be set to respective values chosen in dependence of a current operational state of the luminaire 120-k.

The control portion 124-k may further operate the communication portion 123-k to transmit (e.g. broadcast) status indication messages from the luminaire 120-k to the other nodes of the lighting control network. Conversely, the control portion 124-k may receive, via the communication portion 123-k, status indication messages from other ones of the plurality of luminaires 120. A status indication message may comprise one or more status indications that are descriptive of an aspect of operational status of the luminaire 120-k that transmits the respective status indication message. As non-limiting examples this regard, a status indication transmitted from the luminaire 120-k may comprise e.g. an action indication that identifies a lighting control action taken at the luminaire 120-k or a sensor data indication that reports a current (or the most recent) sensor indication recorded or derived at the control portion 124-k. Non-limiting examples of action indications and sensor data indications include the following:
- a first action indication that indicates switching on the light output of the luminaire 120-k (to be transmitted e.g. in response to observing a change of the occupancy state from non-occupancy to occupancy at the location of the luminaire 120-k),
- a second action indication that indicates initiating adjustment of the light output of the luminaire 120-k to the stand-by light intensity (to be transmitted e.g. in response to observing a change in the occupancy state from occupancy to non-occupancy at the location of the luminaire 120-k),
- a third action indication that indicates keeping on the light output of the luminaire 120-k (to be transmitted e.g. in response to observing continued occupancy at the location of the luminaire 120-k),
- a fourth action indication that indicates keeping the light output of the luminaire 120-k at the stand-by light intensity (to be transmitted e.g. in response to observing continued non-occupancy at the location of the luminaire 120-k);
- an occupancy sensor data indication reporting the current (or the most recent) local occupancy state indication recorded or derived at the luminaire 120-k.

A status indication message may further comprise the luminaire ID assigned to the luminaire 120-k transmitting the status indication message, thereby providing an identification of the luminaire 120-k to which the status indication(s) conveyed in the status indication message pertain.

The adaptation portion 125-k is arranged to carry out one or more learning procedures in the course of operation of the luminaire 120-k for the purpose of further making use of information on environmental characteristics captured and/or derived for one or more other luminaires in its operating environment and/or information on lighting control actions taken by the one or more other luminaires in controlling the light output of the luminaire 120-k. The one or more learning procedures at least partially rely on the above-described operation of the luminaire 120-k as part of the lighting system 100 and on the information received from other luminaires of the lighting system 100 and stored at the luminaire 120-k.

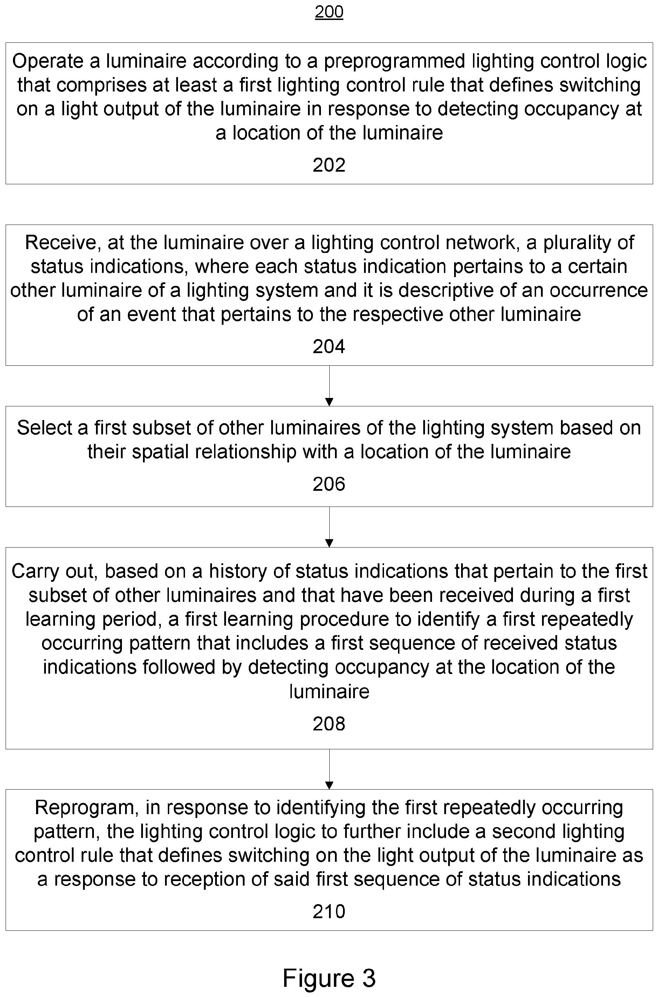

Some aspects of operation of the control portion 124-k to control the light output of the luminaire 120-k in according to the lighting control logic and some aspects of operation of the adaptation portion 125-k for carrying out the one or more learning procedures may be characterized as steps of a method 200 illustrated by a block diagram in Figure 3. The method 200 comprises the following steps:
- operating the luminaire 120-k according to the preprogrammed lighting control logic that comprises at least a first lighting control rule that defines switching on the light output of the luminaire 120-k in response to detecting occupancy at a location of the luminaire 120-k (block 202);
- receiving, over the lighting control network, a plurality of status indications, where each status indication pertains to a certain other luminaire of the lighting system 100 and it is descriptive of an occurrence of an event that pertains to the respective other luminaire (block 204);
- selecting a first subset of the other luminaires of the lighting system 100 based on their spatial relationship with the location of the luminaire 120-k (block 206);
- carrying out, based on a history of status indications that pertain to the first subset of other luminaires and that have been received during a first learning period, a first learning procedure to identify a first repeatedly occurring pattern that includes a first sequence of received status indications followed by detecting occupancy at the location of the luminaire 120-k (block 208); and
- reprogramming, in response to identifying the first repeatedly occurring pattern, the lighting control logic to further include a second lighting control rule that defines switching on the light output of the luminaire 120-k as a response to reception of said first sequence of status indications (block 210).

The operations described above with references to blocks 202 to 210 may be varied or complemented in a number of ways without departing from the scope of the method 200, e.g. in accordance with the examples described in the foregoing and/or the following with a reference to an aspect of operation of the luminaire 120-k and/or with a (direct) reference to operations carried out in relation to respective one of the blocks 202 to 208.

The aspect of the control portion 124-k operating the luminaire 120-k according to the preprogrammed lighting control logic (cf. block 202) is described via the examples provided in the foregoing and/or in the following. The aspect of the adaptation portion 125-k receiving the plurality of status indications serving as basis for the first learning procedure (cf. block 204) may comprise the adaptation portion 125-k receiving the status indications directly from the communication portion 123-k or via the control portion 124-k in the course of its operation of the luminaire 120-k. Moreover, the adaptation portion 125-k may store, in the memory provided in the luminaire 120-k, history data that comprises a history of status indications received over the lighting network, i.e. a history of status indications that pertain to the other luminaires of the lighting system 100. The history data may further comprise a history of occurrences of triggering conditions and the resulting lighting control actions the control portion 124-k has taken as a response to respective occurrences of the triggering conditions, thereby recording a history of application of the one or more lighting control rules of the lighting control logic. Yet further, the history data stored by the adaption portion 125-k may further include a history of status indications transmitted from the luminaire 120-k and/or a history of local sensor indications recorded or derived at the control portion 124-k. Each piece of history data may be stored together with respective timing information that indicates the capturing time, reception time and/or the transmission time of a respective piece of stored data (whichever applies). The timing information may comprise, for example, a respective timestamp that indicates time with respect to a predefined reference time.

The aspect of the adaptation portion 125-k selecting the first subset of the other luminaires of the lighting system 100 based on their spatial relationship with the location of the luminaire 120-k (cf. block 206) relies on information obtained before proceeding to selection of the first subset. In various examples in this regard, this information may be input to the luminaire 120-k via a user interface (UI) of the luminaire 120-k or that of the lighting control apparatus 126-k, it may be received over the lighting control network via the communication portion 123-k, or it may be determined via one or more procedures carried in the course of operation of the luminaire prior to selection of the first subset.

According to an example, the first subset of other luminaires comprises those other luminaires of the lighting system 100 that are pre-assigned into a same luminaire group with the luminaire 120-k. In this regard, the lighting control logic applied by the control portion 124-k may be (pre)programmed to switch or keep on the light output of the luminaire 120-k in response to any other luminaire of the same luminaire group switching or keeping on its light output regardless of the occupancy state indicated by the local occupancy state recorded or derived by the control portion 124-k. Since the luminaire group includes luminaires that are operating in relatively close proximity to each other, e.g. in the same space or in adjacent spaces, inclusion of a certain other luminaire to the same luminaire group with the luminaire 120-k at least indirectly indicates that the respective other luminaire is operating in a location that is relatively close to the location of the luminaire 120-k, and hence the first subset so defined includes a set of luminaires that are relatively close to the luminaire 120-k.

In another example, the first subset of other luminaires comprises those other luminaires of the lighting system 100 that are located in the same space with the luminaire 120-k. In this regard, the luminaire 120-k may receive, e.g. via the UI or over the lighting control network, information that identifies the other luminaires that are located in the same space with the luminaire 120-k or information that specifies respective locations of the luminaires of the lighting system 100 within the one or more spaces, whereas the adaptation portion 125-k may use this information to identify those ones of the other luminaries of the lighting system 100 that are in the same space with it. In the latter scenario, the received information may be provided e.g. in a form of a floorplan, which indicates at least approximate respective locations of the plurality of luminaires 120 within the one or more spaces of a building or area.

In a further example, the first subset of luminaires comprises those other luminaires of the lighting system 100 that are within a predefined distance from the luminaire 120-k. In this regard, the luminaire 120-k may receive, e.g. via the UI or over the lighting control network, information that indicates respective distances from the other luminaires of the lighting system 100 to the luminaries 120-k or information that specifies respective locations of the luminaires of the lighting system 100 within the one or more spaces, whereas the adaptation portion125-k may use this information to identify those ones of the other luminaries of the lighting system 100 that are within the predefined distance from it. As in the previous example, the received information may be provided e.g. in a form of a floorplan.

In a particular example of the luminaire receiving information that specifies respective locations of the luminaires of the lighting system 100 within the one or more spaces, the luminaire 120-k receives, via the UI or over the lighting control network, information of its on location within the one or more spaces and/or an indication of a space of the one or more spaces within which it is located. Moreover, the luminaire 120-k shares this location and/or space information over the lighting control network with the other luminaires of the lighting system 100 and receives the corresponding information from the other luminaires of the light system 100. Consequently, the luminaire 120-k receives the location and/or space information from the other luminaires of the lighting system 100 and the adaptation portion 125-k may use this information to identify those ones of the other luminaries of the lighting system 100 that are in the same space with it and/or to identify those other luminaires that are within a predefined distance from it.

Instead of or in addition to receiving information that indicates the respective locations of the (other) luminaires of the lighting system 100 and/or the respective distances thereto, the adaptation portion 125-k may carry out one or more procedures for defining the respective locations of and/or the respective distances to the other luminaires of the lighting system 100. In one example, the one or more procedures are carried out at the luminaire 120-k without active involvement of the other luminaires, whereas in another example the one or more procedures are carried out according to a predefined protocol between the luminaire 120-k and the other luminaires of the lighting system 100. In both these examples the luminaire locations and/or distances may be determined e.g. based on respective changes in signal characteristics (e.g. phase and/or signal strength) in transmission between a plurality of pairs of luminaries and/or based on respective propagation times of signals between a plurality of pairs of luminaires. In a particular example, the luminaire locations may be determined based at least in part on a ranging technique implemented by the plurality of luminaires 120. In case the lighting control network is implemented using Bluetooth or BLE according to the Bluetooth Core specification version 6.0 (or later), the luminaire locations may be determined via application of the Bluetooth Channel Sounding technique.

The aspect of the adaptation portion 125-k carrying out the learning procedure (cf. block 208) may comprise an analysis of the received status indications that pertain to other luminaires of the lighting system 100 that are stored as part of the history data in view of the local occupancy state indications derived at the control portion 124-k that are likewise stored in the history data in order to identify a first repeatedly occurring pattern of the kind described above. The aspect of the adaptation portion 125-k reprogramming the lighting control logic to further include the second lighting control rule (cf. block 210) may comprise adding the second lighting control rule defined via the first learning procedure to the preprogrammed lighting control logic for application by the control portion 124-k after completion of the first learning procedure.

In general, in the present disclosure, the concept of reprogramming the lighting control logic means introducing any change in the lighting control logic that takes effect after completion of the learning procedure and that will be continuously applied by the control portion 124-k in the course of operation of the luminaire 120-k subsequent to the reprogramming. In this regard, the change may comprise adding a new lighting control rule to the lighting control logic, deleting (e.g. removing, disabling or deactivating) a lighting control rule currently included in the lighting control logic, or modifying a lighting control rule currently included in the lighting control logic.

According to an example, the lighting control logic prior to the first learning procedure comprises a third lighting control rule that defines switching on the light output of said luminaire 120-k in response to receiving a certain status indication that pertains to another luminaire of the first subset, while the aspect of the adaptation portion 125-k reprogramming the lighting control logic comprises deleting the third lighting control rule from the lighting control logic upon introduction of the second lighting control rule to the lighting control logic. In a variation of this example, the third lighting control rule is kept in the lighting control logic despite introduction of the second lighting control rule. Herein, the certain status indication considered in the third lighting control rule may be one that indicates the respective other luminaire switching on its light output or the one that indicates detecting occupancy at the location of the respective other luminaire.

The adaptation portion 125-k may carry out the first learning procedure of the kind described in the foregoing using any suitable learning technique known in the art. Non-limiting examples of suitable learning techniques include the one described in paragraph [0033] of the European patent publication no. 2919562 A1 and the one described in paragraphs [0032] to [0058] of the European patent publication no. 3171674 A1, *mutatis mutandis*, whereas in further non-limiting examples the learning procedure may be based on a machine learning technique known in the art. The first learning period considered in the first learning procedure may be any time period that precedes the first learning procedure and it covers the history data recorded for the first learning period. A duration of the first learning period is chosen according to the circumstances, whereas in non-limiting examples the duration of the first learning period may be in a range from a few hours to a few days.

The first learning procedure is constrained to consider only those status indications that pertain to the first subset of other luminaires. Such limitation of the other luminaires considered in the first learning procedure ensures that the first learning procedure bases the learning on information that is guaranteed to convey information that is meaningful for assisting lighting control at the luminaire 120-k due to this information pertaining to locations of the one or more spaces that are relatively close to the location of the luminaire 120-k while ignoring information that pertains to locations further away from the luminaries 120-k. While such an approach is useful for ensuring that the information that is highly likely most meaningful for the learning is accounted for regardless of the role and location of the luminaire 120-k in relation to those of the other luminaries of the lighting system 100, such an approach may be especially useful for ensuring meaningful learning for a luminaire 120-k that is operating in a location that is relatively infrequently occupied and hence the second lighting control rule that relies on status indications (e.g. occupancy state indications) that pertain to locations in its proximity may highly useful for ensuring that also the luminaire 120-k switches on its light output when a location in its proximity is occupied.

In various examples, the first learning procedure may further apply one or more of the following constraints:
- the status indications considered in identification of the first sequence of received status indications include (only) status indications of one more predefined type, e.g. status indications that pertain to the respective other luminaire switching on its light output and/or status indications that pertain to detecting occupancy at the location of the respective other luminaire;
- the first sequence of received status to be identified in the first learning procedure comprises at most a predefined number of status indications or it comprises exactly the predefined number of status indications;
- the first sequence of received status to be identified in the first learning procedure comprises have been received within a time period of predefined duration and/or the time gap between the first sequence and the following detection of occupancy at the location of the luminaire 120-k does not exceed a predefined threshold value.

In non-limiting examples, the first sequence of received status indications may include one or more status indications, possibly constrained to include exactly or at most the predefined number of status indications according to the examples outlined above. The duration of the time period that may in some examples be applied to limit the maximum temporal extent of the first sequence of received status indications may be e.g. in a range from a few seconds to a few tens of seconds. Along similar lines, the threshold value for the time gap between the first sequence of received status indications and the subsequent detection of occupancy at the location of the luminaire 120-k that may be applied in some examples may be e.g. in a range from a hundredths of a second to a few seconds.

In various examples, the method 200 implemented by the learning portion 125-k may further comprise the following steps:
- determining a second subset of other luminaires of the lighting system 100, where the second subset includes those other luminaires that are included in the first subset of other luminaires described in the foregoing together with one or more other luminaires of the lighting system 100 that are not included in the first subset;
- carrying out, subsequent to the first learning procedure and based on a history of status indications that pertain to the second subset of other luminaires and that have been received during a second learning periods, a second learning procedure to identify a second repeatedly occurring pattern that includes a second sequence of received status indications followed by detecting occupancy at the location of the luminaire 120-k; and
- reprogramming, in response to identifying the second repeatedly occurring pattern, the lighting control logic to further include a fourth lighting control rule that defines switching on the light output of said luminaire 120-k as a response to reception of said second sequence of status indications.

Providing the second subset of other luminaries as an extension of the first subset of other luminaires allows for basing the second learning procedure on information obtained over an enlarged portion of the one or more spaces, thereby enabling the learning portion 125-k the account for more complex operational relationships between luminaires of the lighting system 100. According to an example, the second subset of luminaires considered in the second learning procedure include all other luminaires of the lighting system 100.

The second learning period considered in the second learning procedure is longer that the first learning period considered in the first learning procedure. According to an example, there is no temporal overlap between the first and second learning periods, whereas in another example the second learning period includes the first learning period in its entirety or the second learning period includes a portion of the first learning period. Apart from these considerations in relation to the first learning period, the second learning period may be any time period that precedes the second learning procedure and it covers the history data recorded for the second learning period. A duration of the second learning period is chosen according to the circumstances, whereas in non-limiting examples the duration of the second learning period may be in a range from a few days to a few weeks.

The aspect of the adaptation portion 125-k reprogramming the lighting control logic to further include the fourth lighting control rule defined via the second learning procedure may comprise adding the fourth lighting control rule to the preprogrammed lighting control logic for application by the control portion 124-k after completion of the second learning procedure. According to an example, the aspect of the adaptation portion 125-k reprogramming the lighting control logic comprises deleting the second lighting control rule defined via the first learning procedure from the lighting control logic upon introducing the fourth lighting control rule to the lighting control logic, whereas in another example the second lighting control rule is kept in the lighting control logic despite introduction of the fourth lighting control rule.

The examples above are described with reference to the lighting system 100 comprising the plurality of luminaires 120, where each luminaire 120-k is provided as a respective smart learning luminaire that includes:
- the control portion 124-k that is arranged for controlling the light output of the luminaire 120-k at least partially based on sensor data obtained from the one or more sensors of the sensor portion 122-k, and
- the adaptation portion 125-k that is arranged for adjusting operation of the control portion 124-k in accordance with one or more characteristics of operating environment of the luminaire 120-k.

In one variation of the above-described approach, the luminaire 120-k may be provided without the adaptation portion 125-k and the operations described in the foregoing for the adaptation portion 125-k may be carried out in an adaptation portion provided in another entity, e.g. in the lighting system gateway 102 or in the server 103. In such a scenario, the information serving as basis for carrying out the first learning procedure and, optionally, the second learning procedure for the luminaire 120-k are supplied over the lighting control network to the entity that implements the adaptation portion for the luminaire 120-k and, subsequently, the lighting control rule(s) defined via the learning procedure(s) are provided via the lighting control network to the luminaire 120-k for inclusion in the lighting control logic and subsequent application by the control portion 124-k therein-

In another variation of the above-described approach, the luminaire 120-k may be provided with the dedicated sensor portion 122-k. In such a scenario, the lighting system 100 further comprises a separate sensor unit associated with the luminaire 120-k, which sensor unit is arranged to observe environmental characteristics at the location of the luminaire 120-k in accordance with the examples provided in the foregoing for the sensor portion 122-k, *mutatis mutandis.* In this scenario, the sensor unit may supply the sensor data recorded or derived therein over the lighting control network to the luminaire 120-k or the sensor unit may supply the sensor data to a controller unit (implemented e.g. as part of the lighting system gateway 102), which forwards the sensor data to the luminaire 120-k for application as basis for lighting control therein via operation of the control portion 124-k.

In a further variation of the above-described approach, the luminaire 120-k may be provided with a simplified control portion that receives lighting control commands from the controller unit and control the light output of the luminaire 120-k accordingly. In such a scenario, the luminaire 120-k is typically provided also without the dedicated sensor portion 122-k and the environmental characteristics at the location of the respective luminaire are observed via application of the sensor unit, as described above: the sensor unit supplies the sensor data over the lighting control to the controller unit, which carries out the lighting control in accordance with the examples provided in the foregoing for the control portion 124-k, *mutatis mutandis*, to derive respective lighting control commands for transmission over the lighting control network to the luminaire 120-k for implementation by the (simplified) control portion therein.

In the examples described in the foregoing, the lighting control network that relies on a wireless communication technique is assumed. In other examples, the lighting control network may be provided as a wired network or as a wired bus and the communication between the nodes of the lighting control network may be carried out in accordance with a predefined lighting control protocol, such as the Digital Addressable Lighting Interface (DALI) specified in a series of technical standards IEC 62386. In some (other) examples the wired communication network may involve Power over Ethernet (PoE) or a packet switched communication network such as an Internet Protocol (IP) based network. In such scenarios, the communication portion 123-k of the luminaire is arranged to enable communication over the wired network or the wired bus in accordance with the applied lighting control protocol.

Figure 4 illustrates a block diagram of some components of an apparatus 300 that may be employed to implement operations described in the foregoing with references to the lighting control apparatus 126-k. The apparatus 300 comprises a processor 310 and a memory 320. The memory 320 may store data and computer program code 325. The apparatus 300 may further comprise communication means 330 for wired and/or wireless communication with other apparatuses and/or user I/O (input/output) components 340 that may be arranged, together with the processor 310 and a portion of the computer program code 325, to provide the user interface for receiving input from a user and/or providing output to the user. The user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the lighting control apparatus 126-k. The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the lighting control apparatus 126-k. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of the lighting control apparatus 126-k. Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the lighting control apparatus 126-k.

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the lighting control apparatus 126-k. The computer-readable non-transitory medium may comprise a memory device, a record medium or another article of manufacture that tangibly embodies the computer program. As another example, the computer program may be provided as a signal configured to reliably transfer the computer program.

Reference(s) to a processor herein should be construed broadly, encompassing both programmable processors and dedicated circuits such FPGAs, ASICs, etc.

## Claims

1. A control apparatus (126-k) for a luminaire (120-k) of a lighting system (100) comprising a plurality of luminaires (120) communicatively coupled to each other by a lighting control network, the control apparatus (126-k) comprising:
a control portion (124-k) arranged to control light output of said luminaire (120-k) according to a preprogrammed lighting control logic that comprises at least a first lighting control rule that defines switching on the light output in response to detecting occupancy at a location of said luminaire (120-k); and
an adaptation portion (125-k) arranged to:
receive, over the lighting control network, a plurality of status indications, where each status indication pertains to a certain other luminaire of the lighting system (100) and it is descriptive of an occurrence of an event that pertains to the respective other luminaire,
select a first subset of other luminaires based on their spatial relationships with a location of said luminaire (120-k),
carry out, based on a history of status indications that pertain to said first subset of other luminaires and that have been received during a first learning period, a first learning procedure to identify a first repeatedly occurring pattern that includes a first sequence of received status indications followed by detecting occupancy at the location of said luminaire (120-k), and
reprogram, in response to identifying the first repeatedly occurring pattern, the lighting control logic to further include a second lighting control rule that defines switching on the light output of said luminaire (120-k) as a response to reception of said first sequence of status indications.

2. A control apparatus (126-k) according to claim 1, wherein the learning portion (125-k) is arranged to carry out the learning procedure at least based on status indications that are descriptive of one of the following events that pertain to the respective other luminaire:
the respective other luminaire switching on its light output,
detecting occupancy at the location of the respective other luminaire.

3. A control apparatus (126-k) according to claim 1 or 2, wherein the first sequence comprises a predetermined number of status indications.

4. A control apparatus (126-k) according to any of claims 1 to 3, wherein the first sequence comprises status indications received within a time period of a predefined duration.

5. A control apparatus (1260-k) according to any of claims 1 to 4, wherein the first subset of other luminaires comprises those other luminaires of the lighting system (100) that are located in a same space with said luminaire (120-k).

6. A control apparatus (126-k) according to any of claims 1 to 5, wherein the first subset of other luminaires comprises other luminaires of the lighting system (100) that are within a predefined distance from said luminaire (120-k).

7. A control apparatus (126-k) according to any of claims 1 to 6, wherein the first subset of other luminaires comprises those other luminaires of the lighting system (100) that are pre-assigned into a same luminaire group with said luminaire (110-k).

8. A control apparatus (126-k) according to any of claims 1 to 7, wherein
the preprogrammed lighting control logic comprises a third lighting control rule that defines switching on the light output of said luminaire (120-k) in response to receiving, from any other luminaire of the first subset, a status indication that pertains to one of the following events: the respective other luminaire switching on its light output, detecting occupancy at the location of the respective other luminaire; and
the learning portion (125-k) is further arranged to reprogram the lighting control logic to delete the third lighting control rule upon introduction of the second lighting control rule.

9. A control apparatus (126-k) according to any of claims 1 to 8, wherein the learning portion (125-k) is further arranged to:
determine a second subset of other luminaires that includes the first subset of other luminaires together with one or more other luminaires of the lighting system (100) that are not included in the first subset;
carry out, subsequent to the first learning procedure and based on a history of status indications that pertain to the second subset of other luminaires and that have been received during a second learning period, a second learning procedure to identify a second repeatedly occurring pattern that includes a second sequence of received status indications followed by detecting occupancy at the location of said luminaire (120-k); and
reprogramming, in response to identifying the second repeatedly occurring pattern, the lighting control logic to further include a fourth lighting control rule that defines switching on the light output of said luminaire (120-k) as a response to reception of said second sequence of status indications.

10. A control apparatus (126-k) according to claim 9, wherein the second subset comprises all luminaires of the lighting system (100).

11. A control apparatus (126-k) according to claim 9 or 10, wherein the second learning period is longer than the first learning period.

12. A control apparatus (126-k) according to any of claims 9 to 11, wherein the learning portion (125-k) is further arranged to reprogram the lighting control logic to disable the second lighting control rule upon introduction of the fourth lighting control rule.

13. A method (200) for controlling light output from a luminaire (120-k) of a lighting system (100) comprising a plurality of luminaires (120) communicatively coupled to each other by a lighting control network, the method (200) comprising:
operating (202) said luminaire (120-k) according to a preprogrammed lighting control logic that comprises at least a first lighting control rule that defines switching on the light output in response to detecting occupancy at a location of said luminaire (120-k);
receiving (204), over the lighting control network, a plurality of status indications, where each status indication pertains to a certain other luminaire of the lighting system (100) and it is descriptive of an occurrence of an event that pertains to the respective other luminaire;
selecting (206) a first subset of other luminaires based on their spatial relationships with a location of said luminaire (120-k);
carrying out (208), based on a history of status indications that pertain to the first subset of other luminaires and have been received during a first learning period, a first learning procedure to identify a first repeatedly occurring pattern that includes a first sequence of received status indications followed by detecting occupancy at the location of said luminaire (120-k); and
reprograming (210), in response to identifying the first repeatedly occurring pattern, the lighting control logic to further include a second lighting control rule that defines switching on the light output of said luminaire (110-k) as a response to reception of said first sequence of status indications.

14. A computer program comprising computer readable program code configured to cause performing of the method according to claim 13 when said program code is executed in a control apparatus (126-k) of a luminaire (120-k) of a lighting system (100) comprising a plurality of luminaires (120).
